# EUROPEAN PATENT SPECIFICATION

(11) **EP 2 781 872 B1**
(45) Date of publication and mention of the grant of the patent: **19.01.2022**
(21) Application number: 14160541.0
(22) Date of filing: 18.03.2014
(51) Int. Cl.: F28F 1/16, B22F 3/00, B29C 67/00, H02K 9/00

(54) **HEAT EXCHANGER DESIGN AND FABRICATION**
WÄRMETAUSCHERENTWURF UND HERSTELLUNG
CONCEPTION ET DE FABRICATION D'ÉCHANGEUR DE CHALEUR

(30) Priority: 21.03.2013 US 201313848356
(43) Date of publication of application: 24.09.2014
(73) Proprietor: Hamilton Sundstrand Corporation, Windsor Locks, CT 06096-1010 (US)
(72) Inventor: VEDULA, Venkata R., Unionville, CT 06085 (US); TELAKOWSKI, Robert, Windsor Locks, CT 06096 (US)
(74) Representative: Dehns

(56) References cited:
- WO-A1-01/02160
- JP-A- 2005 077 035
- SU-A1- 1 139 962
- US-A1- 2008 093 065

## Description

### BACKGROUND OF THE INVENTION

Exemplary embodiments of this invention generally relate to heat exchangers and, more particularly, to methods of manufacturing a heat exchanger. A heat exchanger according to the preamble of claim 1 is disclosed in US 2008/0093065.

Heat exchangers are devices built for transferring heat from one fluid to another. The fluids may be separated by a solid wall or other divider that keeps them from mixing. Heat exchangers are commonly used in refrigeration, air conditioning, space heating, electricity generation, and chemical processing. Heat exchangers are of particular use in the aerospace and automobile industries.

For efficiency, heat exchangers are designed to maximize the surface area of the wall between the two fluids, while minimizing resistance to fluid flow through the heat exchanger. The performance of the heat exchanger may also be affected by the addition of fins, corrugations or other forms of protuberances in one or both flow directions which increase surface area, channel fluid flow, and induce turbulence.

Known methods of manufacturing heat exchangers involve complex assembly and multiple steps of attachment, brazing, soldering, or welding operations of the various parts of the heat exchangers, including but not limited to, the core, the exterior, fins, and manifolds for example. Known heat exchangers are typically made from sheet metal. The cost of manufacturing heat exchangers using the above described methods is high due to the complex assembly operations and the maintenance of tools to conduct the assembly operations.

Prior art heat exchangers are shown in US 2008/0093065 A1, SU 1 139 962 A1, JP 2005 077035 A and WO 01/02160 A1.

### BRIEF DESCRIPTION OF THE INVENTION

According to the present invention, there is provided a heat exchanger as claimed in claim 1.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross-section of a heat exchanger outside the wording of the claims
FIG. 2 is a cross-section of a heat exchanger according to the invention;

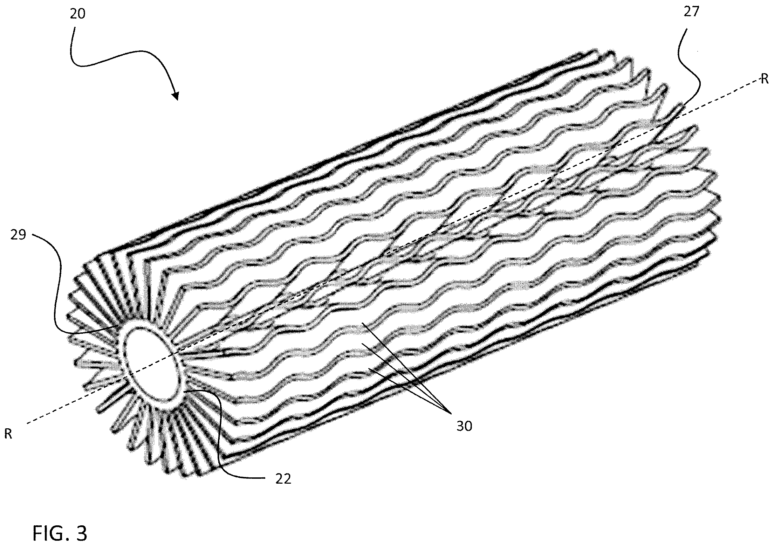

FIG. 3 is a perspective view of the heat exchanger illustrated in FIG. 1;
FIG. 4 is a side view of a heat exchanger according to the invention;
FIG. 5 is a method of manufacturing a heat exchanger.

The detailed description explains embodiments of the invention, together with advantages and features, by way of example with reference to the drawings.

### DETAILED DESCRIPTION OF THE INVENTION

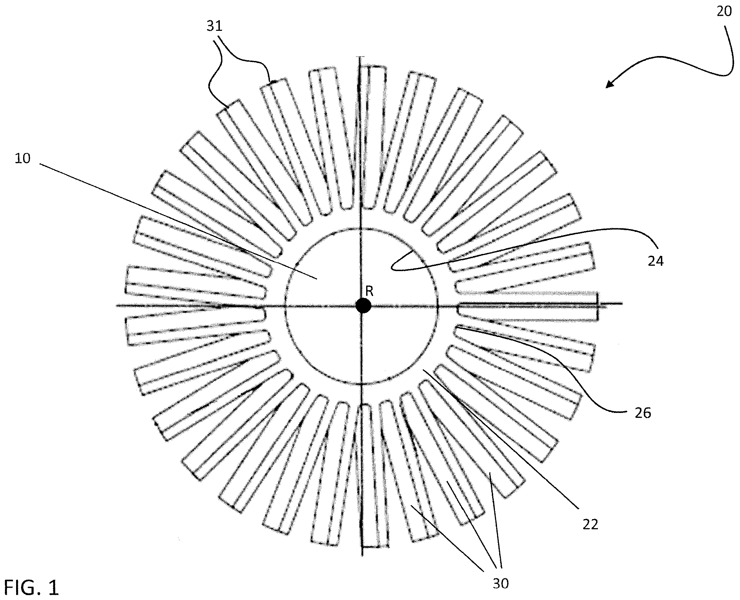

Referring now to the FIGS., a heat exchanger 20 configured for use with a rotating component 10, such as a motor driven shaft for example, is illustrated. The heat exchanger 20 includes a generally cylindrical base 22 having a plurality of fins 30 extending generally radially therefrom. Each of the plurality of fins 30 is spaced apart from another of the plurality of fins 30. In one embodiment, the heat exchanger 20 is substantially axisymmetric about the axis of rotation R of the rotating component 10. In an arrangement outside the wording of the claims, illustrated in FIG. 1, a first surface 24 of the base 22 may be positioned adjacent to the rotating component 10 such that the plurality of fins 30 extends generally outwardly from a second, opposite surface 26 of the base 22.

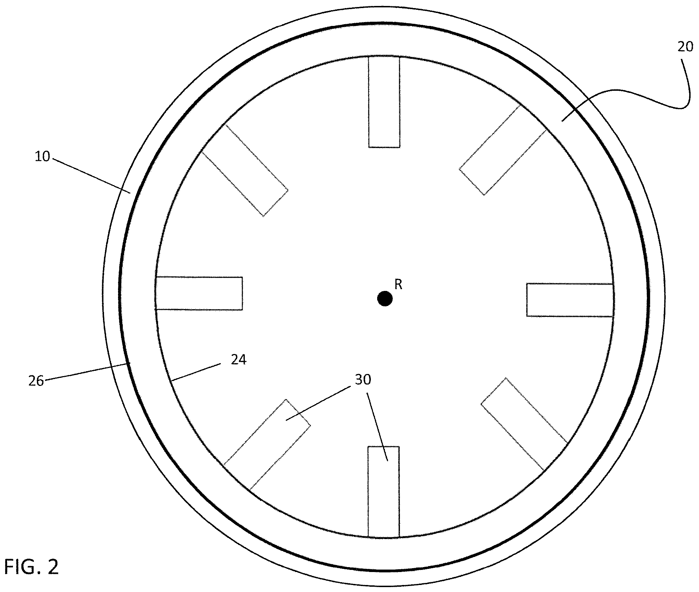

A generally cylindrical element (not shown) may be arranged adjacent and connected to the distal ends 31 of the fins 30. The second surface 26 of the base 22 is arranged adjacent to the rotating component 10 such that the plurality of fins 30 extends generally inwardly from the first surface 24 of the base as is illustrated in FIG. 2.

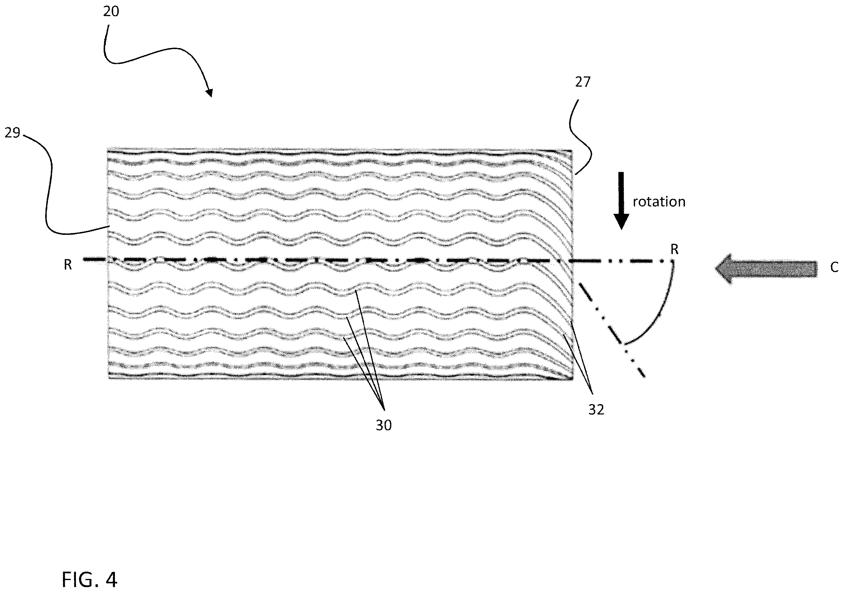

Each of the plurality of fins 30 is configured to extend generally longitudinally along the base 22, from a first end 27 to a second, opposite end 29. The shape (and optionally size) of at least one of the plurality of fins 30 varies over the length of the base 22 (FIG. 4). As illustrated in FIG. 4, a portion of the each of the plurality of fins 30, such as an inlet end 32 for example, is skewed relative to the axis of rotation R to create a pumping mechanism and enhance the cooling flow C over the fins 30 during rotation of the rotating member 10 about axis R.

In one not claimed embodiment, the heat exchanger 20 is formed through an additive metal fabrication process that applies energy to a generally powdered material, such as a powered metal, metal alloy, ceramic or composite material for example, to form a shape. Exemplary additive metal fabrication processes include, but are not limited to, direct metal laser sintering (DMLS), selective laser sintering (SLS), and electron beam melting (EBM) for example.

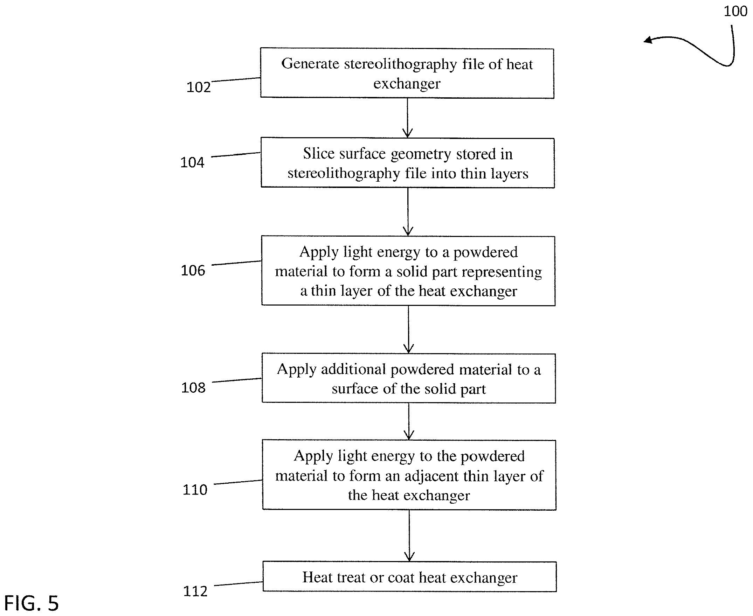

Referring now to FIG. 5, a method 100 of fabricating a heat exchanger 20 is described. In block 102, a stereolithography file that describes the surface geometry of the heat exchanger 20 is generated, for example based on a three dimensional model of the heat exchanger 20 created using a computer aided design (CAD) software. The stereolithography file is provided as an input to a pre-processing software configured to slice the surface geometry of the heat exchanger 20 into a plurality of thin layers, as illustrated in block 104. Because the heat exchanger 20 is substantially axisymmetric, each of the plurality of thin layers will similarly be axisymmetric about the axis of rotation R. The thickness of each of the plurality of thin layers will vary depending on the specific additive metal fabrication process used, as well as the size of the heat exchanger 20. For example, if the heat exchanger 20 is fabricated using direct metal laser sintering, the plurality of layers may have a thickness of about 20 micrometers, whereas if the heat exchanger 20 is fabricated using electron beam melting, the plurality of layers may have a thickness of about 40 micrometers.

In block 106, after the model of the heat exchanger 20 has been sliced into a plurality of layers, energy from an energy source is applied to a powdered material on a surface, such as a build platform for example. Examples of the energy source, include but are not limited to, an electron beam, a laser, or any other suitable light source known to a person having ordinary skill in the art for example. The energy or heat from the energy source locally melts the powdered material such that the powdered material fuses into a substantially solid part to create a generally twodimensional section representing a thin layer of the heat exchanger 20. Additional powdered material is arranged on a surface of the fused solid part in block 108. Similar to block 106, in block 110, energy from the energy source is again applied to the powered material to form an adjacent thin layer of the heat exchanger 20. The addition of powered material in block 108 and the application of energy to the powered material in block 110, is generally repeated until each of the plurality of thin layers of the heat exchanger model has been created. Because the layers of the heat exchanger 20 are built sequentially, each thin layer is integrally formed with at least one adjacent thin layer to form a unitary heat exchanger 20. In one embodiment, the heat exchanger 20 may be heat treated to eliminate residual stresses in the heat exchanger 20, as illustrated in block 112. In another embodiment, a protective coating may be applied to the heat exchanger 20, in block 112, based on the intended application of the heat exchanger 20.

By forming a heat exchanger 20 using an additive metal fabrication process, the heat exchanger 20 may be formed as a single component and does not require the assembly of separate parts, or the rolling and aligning of fins to form an axisymmetric configuration. In addition, fabrication using an additive process is offers significant advantages over conventional methods in both production time and cost. For example, the heat exchanger 20 may be fabricated using materials, such as nickel for example, that would not be suitable using conventional methods because of cost and inefficiencies. In addition, building the heat exchanger by additive manufacturing process eliminates the brazing operation, and therefore the unse of any undesirable materials. Because the heat exchanger 20 is built layer by layer, it is possible to customize a heat exchanger 20 to an application, such as by including non-uniform features or passages that could not previously be cast or machined. For example, the fins 30 of the heat exchanger 20 may be formed with a thickness less than, or considerably more than if the heat exchanger 20 was formed by folding a piece of sheet metal.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which arc commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A heat exchanger (20) configured for use with a motor-driven shaft (10) about an axis of rotation (R), the heat exchanger (20) comprising a generally cylindrical base (22) having a plurality of fins (30) integrally formed with and extending generally radially from the base (22), such that the heat exchanger (20) is substantially axisymmetric about the axis of rotation (R), wherein a portion of each of the plurality of fins (30) adjacent a first end (27) of the base (22) is skewed relative to the axis of rotation (R), the plurality of fins (30) extend generally radially inward from a second surface (24) of the base (22), and the plurality of fins (30) extend from a first end (27) of the base (22) to a second, opposite end (29) of the base (22);
**characterised in that**:
a shape of each of the plurality of fins (30) varies from the first end (27) of the base (22) to the second, opposite end (29) of the base (22).

2. The heat exchanger (20) according to claim 1, wherein the plurality of fins (30) are substantially identical.

3. The heat exchanger (20) according to claim 1 to 2, wherein a size of each of the plurality of fins (30) varies from the first end (27) of the base (22) to the second, opposite end (29) of the base (22).

## Patentansprüche

1. Wärmetauscher (20), der zur Verwendung mit einer motorgetriebenen Welle (10) um eine Rotationsachse (R) konfiguriert ist, wobei der Wärmetauscher (20) eine allgemein zylindrische Basis (22) umfasst, die eine Vielzahl von Rippen (30) aufweist, die einstückig mit der Basis (22) ausgebildet ist und sich allgemein radial von dieser erstreckt, sodass der Wärmetauscher (20) um die Rotationsachse (R) im Wesentlichen asymmetrisch ist, wobei ein Abschnitt jeder der Vielzahl von Rippen (30) angrenzend an ein erstes Ende (27) der Basis (22) in Bezug auf die Rotationsachse (R) schräg ist, wobei sich die Vielzahl von Rippen (30) allgemein radial einwärts von einer zweiten Fläche (24) der Basis (22) erstreckt und sich die Vielzahl von Rippen (30) von einem ersten Ende (27) der Basis (22) zu einem zweiten gegenüberliegenden Ende (29) der Basis (22) erstreckt;
**dadurch gekennzeichnet, dass**:
eine Form jeder der Vielzahl von Rippen (30) von dem ersten Ende (27) der Basis (22) zu dem zweiten gegenüberliegenden Ende (29) der Basis (22) variiert.

2. Wärmetauscher (20) nach Anspruch 1, wobei die Vielzahl von Rippen (30) im Wesentlichen identisch ist.

3. Wärmetauscher (20) nach Anspruch 1 oder 2, wobei eine Größe jeder der Vielzahl von Rippen (30) von dem ersten Ende (27) der Basis (22) zu dem zweiten gegenüberliegenden Ende (29) der Basis (22) variiert.

## Revendications

1. Échangeur de chaleur (20) conçu pour être utilisé avec un arbre entraîné par moteur (10) autour d'un axe de rotation (R) , l'échangeur de chaleur (20) comprenant une base généralement cylindrique (22) ayant une pluralité d'ailettes (30) formées intégralement avec la base (22) et s'étendant généralement radialement depuis celle-ci, de sorte que l'échangeur de chaleur (20) est sensiblement axisymétrique autour de l'axe de rotation (R), dans lequel une partie de chacune de la pluralité d'ailettes (30) adjacente à une première extrémité (27) de la base (22) est inclinée par rapport à l'axe de rotation (R), la pluralité d'ailettes (30) s'étendent généralement radialement vers l'intérieur depuis une seconde surface (24) de la base (22), et la pluralité d'ailettes (30) s'étendent depuis une première extrémité (27) de la base (22) vers une seconde extrémité opposée (29) de la base (22) ;
**caractérisé en ce que** :
une forme de chacune de la pluralité d'ailettes (30) varie de la première extrémité (27) de la base (22) à la seconde extrémité opposée (29) de la base (22).

2. Échangeur de chaleur (20) selon la revendication 1, dans lequel la pluralité d'ailettes (30) sont sensiblement identiques.

3. Échangeur de chaleur (20) selon la revendication 1 et 2, dans lequel une taille de chacune de la pluralité d'ailettes (30) varie de la première extrémité (27) de la base (22) à la seconde extrémité opposée (29) de la base (22).
